# FASCICULE DE BREVET EUROPEEN

(11) **EP 1 108 608 B1**
(45) Date de publication et mention de la délivrance du brevet: **19.07.2006**
(21) Numéro de dépôt: 00403445.0
(22) Date de dépôt: 08.12.2000
(51) Int. Cl.: B60P 7/08

(54) **Dispositif d'accrochage à rail**
Vorrichtung zum Festklammern an eine Schiene
Tie down device on a rail

(30) Priorité: 13.12.1999 FR 9915685
(43) Date de publication de la demande: 20.06.2001
(73) Titulaire: Renault s.a.s., 92100 Boulogne Billancourt (FR)
(72) Inventeur: Michelin, Didier, 78950 Gambais (FR)

(56) Documents cités:
- FR-A- 1 161 214
- FR-A- 2 675 442
- GB-A- 2 186 018
- US-A- 2 859 710
- US-A- 3 713 616
- US-A- 4 248 558

## Description

La présente invention se rapporte à un dispositif d'accrochage à rail, du type permettant l'accrochage de sangles ou de charges à des endroits choisis parmi une pluralité d'emplacements prédéterminés le long d'un rail.

De tels dispositifs sont utilisés notamment dans les soutes des avions ou les caisses des véhicules de transports. Des rails sont disposés de place en place sur les parois, et des sangles peuvent être accrochées à des endroits prédéterminés des rails pour permettre l'arrimage de la cargaison.

Des dispositifs de ce type sont connus par exemple par les documents EP 0 512 389 ou GB 2186018. Ce dernier montre un dispositif selon le préambule de la revendication 1.

Dans le dispositif connu, l'élément d'accrochage mobile ne peut être introduit dans le canal que par une extrémité de celui-ci, la partie de verrou ayant une section transversale sensiblement complémentaire dudit canal. Les ailes du rail laissent entre elles une ouverture longitudinale à bords parallèles dans lesquels les encoches forment des échancrures latérales qui définissent des logements pour ledit élément de positionnement qui est situé à l'extérieur du canal du rail. La position de l'élément d'accrochage peut être modifiée en retirant ledit élément de positionnement de son logement dans les échancrures, en faisant glisser la partie de verrou dans le canal, et en remettant ledit élément de positionnement dans un nouveau logement. L'élément d'accrochage est cependant prisonnier du canal par la partie de verrou et on ne peut pas introduire sur le rail un nouvel élément d'accrochage mobile sans déplacer tous ceux qui le précèdent sur le rail.

Le but de l'invention est de remédier à ce problème et d'une manière plus générale de proposer un nouveau dispositif d'accrochage du type général précité, mais amélioré sous différents aspects relatifs à la résistance de l'accrochage, à la facilité d'utilisation, et à la diminution du bruit lors de l'utilisation.

L'invention atteint son but dans le cadre d'un dispositif d'accrochage du type précité par les caractéristiques de la partie caractérisante de la revendication 1.

De la sorte, le verrou est éclipsable et permet d'introduire le dispositif d'accrochage à n'importe quel endroit du rail par l'ouverture longitudinale du canal comprise entre les ailes du rail. Il suffit de tourner la patte du verrou en faisant pivoter l'axe qui dépasse du canal pour verrouiller le dispositif dans le canal ; la patte est plaquée, grâce au ressort, contre l'aile du rail, de l'intérieur vers l'extérieur, au niveau d'une encoche formée dans le bord de l'aile de manière à bloquer aussi longitudinalement le dispositif d'accrochage dans la position prédéterminée correspondant à l'encoche choisie.

Avantageusement, la partie de verrou comporte deux pattes de verrouillage opposées de manière à équilibrer le dispositif.

Avantageusement, la partie de verrou comporte aussi une partie de came autorisant le pivotement de la patte ou des pattes dans un seul sens.

Dans un exemple de réalisation, la came est constituée par un plateau formé de deux quadrants opposés circulaires et de deux quadrants opposés à profil non circulaire de plus grand diamètre.

La partie de verrou peut être formée d'un seul tenant avec la partie d'axe, ou bien au contraire la partie de verrou et la partie d'axe sont dissociées. Elle peuvent être solidarisées au montage, en permettant notamment l'interposition de pièces telles qu'une bride de maintien de l'anneau d'accrochage. La partie d'axe peut aussi être montée coulissante dans la partie de verrou. Dans ce cas, un ressort est prévu pour maintenir la partie d'axe dans une position de butée.

Avantageusement la partie de verrou comporte sous sa face inférieure un ressort de compression, par exemple un ressort hélicoïdal, disposé entre l'âme du rail et ladite face.

Le ressort de compression peut porter sur l'âme du rail par l'intermédiaire d'une coupelle.

Dans ce cas, la coupelle est avantageusement montée coulissante par rapport à la partie de verrou et retenue par la tête d'un pion lié à l'élément d'accrochage.

Selon une caractéristique très avantageuse du dispositif de l'invention, un pion lié à l'élément d'accrochage (qui peut être le même pion que celui qui retient la coupelle) permet l'indexage dudit élément dans des trous prévus dans le rail au niveau des emplacements prédéterminés.

L'invention sera mieux comprise et d'autres avantages et caractéristiques seront mis en évidence à la lecture de la description suivante de plusieurs exemples de réalisation de l'invention. On se référera aux dessins annexés sur lesquels :
- la figure 1 est une vue schématique en perspective d'un dispositif d'accrochage conforme à l'invention,
- la figure 2 est une vue en coupe transversale du dispositif de la figure 1,
- la figure 3 est une vue de côté du rail de la figure 1,
- la figure 4 est une vue de dessus de la pièce de blocage de la figure 1,
- la figure 5 est une vue analogue à la figure 2 d'un second mode de réalisation de dispositif conforme à l'invention,
- la figure 6 est une vue de dessus de la pièce de blocage de la figure 5,
- la figure 7 est une vue analogue à la figure 2 d'un troisième mode de réalisation de dispositif conforme à l'invention,
- la figure 8 est une vue analogue à la figure 2 d'un quatrième mode de réalisation de dispositif conforme à l'invention,
- la figure 9 est une vue en perspective d'une variante de rail.

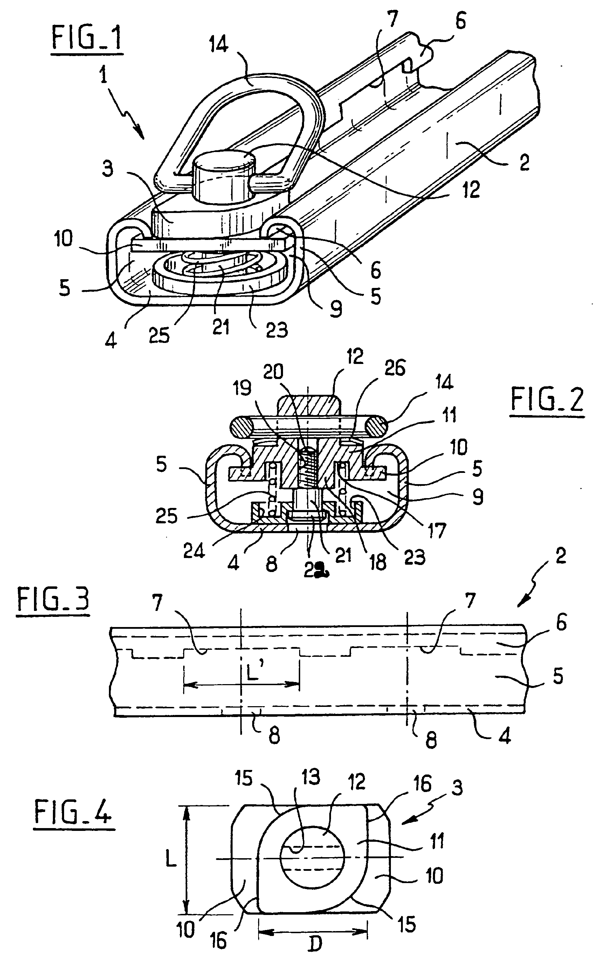

Le premier mode de réalisation du dispositif 1 de l'invention, illustré sur les figures 1 à 4, comporte un rail 2 dans lequel vient se fixer un élément d'accrochage 3.

Le rail 2 est un profil d'acier ou d'aluminium issu de galetage, à forme sensiblement en U comportant une âme 4, deux ailes 5 symétriques terminées à leur partie supérieure par un retour 6 retombant vers l'intérieur verticalement, dans lequel sont formés de place en place, longitudinalement, des encoches allongées 7. Dans l'axe de l'âme 4, des trous 8 sont centrés au milieu des encoches 7. Le rail définit un canal longitudinal 9 avec une ouverture longitudinale à bords parallèles formés par les retours 6.

L'élément d'accrochage 3 regroupe une partie de verrou comportant deux pattes opposées de verrouillage 10 surmontées par une came 11 et un téton central 12 constituant l'axe de l'élément d'accrochage. Les pattes forment une plaque sensiblement rectangulaire à coins arrondis, destinée à venir s'engager dans les encoches 7 du rail (la largeur L des pattes 10 est au plus sensiblement égale ou légèrement inférieure à la longueur L' des encoches 7).

Le téton central 12 est traversé par un trou 13 horizontal, rectiligne ou curviligne, permettant d'engager avec possibilité d'articulation une partie d'un anneau de préhension 14. Un élément élastique tel qu'une rondelle Belleville 26 peut être disposée entre la face supérieure de la came 11 et la partie d'anneau de préhension 24.

La came 11 est symétrique axialement et a une forme sensiblement en losange ; elle a un profil circulaire 15 sur deux quadrants opposés et un profil carré 16 sur les deux quadrants opposés restants ; la plus petite largeur D de la came 11, égale à son diamètre dans la partie de profil circulaire 15, est inférieure à l'ouverture du rail 2 entre ses deux rebords 6 ; en revanche, la plus grande largeur de la came 11, correspondant à la diagonale de ses parties à profil carré, est plus grande que ladite ouverture.

La face inférieure de l'élément d'accrochage 3 comporte une rainure annulaire 17 entourant un bossage axial 18 percé d'un taraudage central 19 dans lequel se visse la queue filetée 20 d'un pion 21 à tête 22. La tête 22, dont le diamètre est inférieur ou égal à celui d'un trou 8 de l'âme du rail, retient une coupelle 23 (de diamètre inférieur à l'ouverture du rail entre ses rebords 6) ; une rainure annulaire profilée 24 de cette coupelle loge l'extrémité d'un ressort hélicoïdal de compression 25 dont l'autre extrémité est logée dans la rainure 17.

L'utilisation du dispositif de l'invention est la suivante.

L'élément d'accrochage 3 est présenté devant l'ouverture du rail 2, entre les deux rebords 6, les pattes de verrouillage 10 étant orientées parallèlement au rail 2 de sorte que la coupelle 23, les pattes 10 et la came 11 peuvent s'introduire dans ladite ouverture, la coupelle 23 reposant sur l'âme 4 du rail. En poussant avec l'anneau 14 sur le téton 12 (ce qui est possible quelle que soit l'orientation de l'anneau 14 en prévoyant un débattement suffisant entre l'anneau et les bords supérieurs du rail, c'est-à-dire au moins égal à la course d'enfoncement du téton), le ressort 25 se comprime et la tête 22 du pion de pilotage porte également sur l'âme 4 du rail. En déplaçant simultanément l'élément d'accrochage le long du rail, la tête 22 du pion de pilotage rencontre un trou 8 de l'âme et peut y pénétrer, ce qui définit un emplacement d'accrochage. Si cet emplacement est l'emplacement retenu, il suffit alors de tourner la pièce d'accrochage 3 d'un quart de tour, dans le seul sens qu'autorise la came 11, de manière à placer les pattes 10 de verrouillage transversalement devant une paire d'encoches 7. On relâche alors la pression sur l'anneau 14 et le téton 12 ; le ressort 25 repousse les pattes 10 dans l'encoche 7 et cale ainsi la pièce d'accrochage. Le ressort 25 et la rondelle élastique 26 contribuent aussi l'un et l'autre à diminuer la bruyance du dispositif.

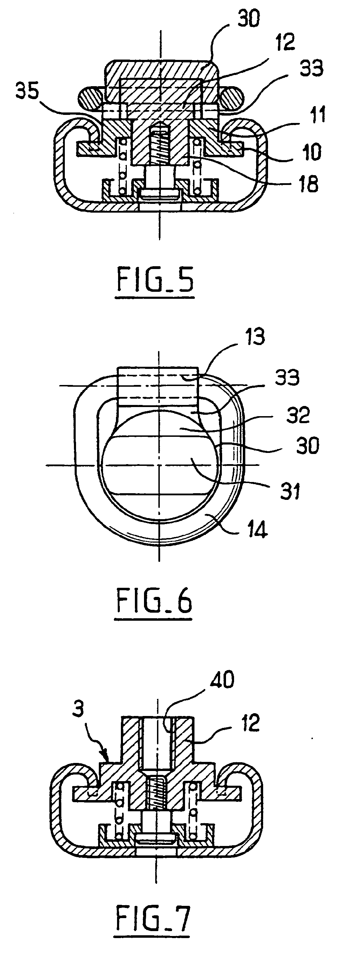

Les figures 5 et 6 représentent une variante de réalisation de la pièce d'accrochage dans laquelle le téton central 12 et le bossage inférieur 18 sont formés sur un axe distinct 30 qui vient s'emmancher dans un logement central prévu dans la pièce de verrou 35 dans laquelle sont formées les pattes de verrouillage 10 et la came 11. L'axe 30 forme un chapeau de sertissage comportant une crête de préhension 31 et un bord circulaire 32 permettant de retenir une bride annulaire 33 dont un bord comprend un trou 13 pour le passage d'une partie de l'anneau excentré 14. Pour le reste, la structure et le fonctionnement du dispositif sont identiques à ce qui a été indiqué pour le premier mode de réalisation.

Dans la variante représentée en figure 7, la pièce d'accrochage 3 ne comporte pas d'anneau 14 mais, dans le téton supérieur 12, un taraudage central 40 permettant la fixation de divers accessoires.

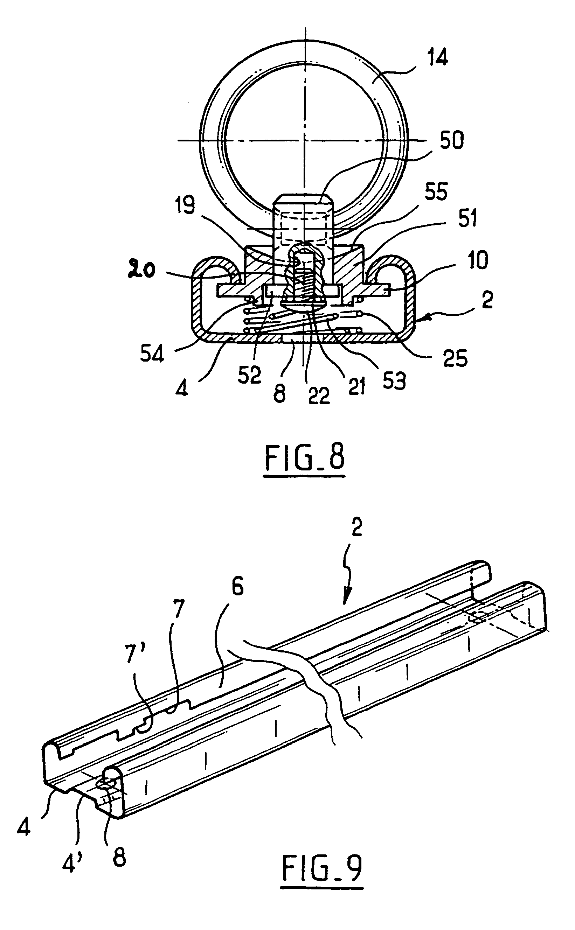

Dans la variante représentée en figure 8, l'anneau 14 passe dans un trou d'un axe 50, lequel est monté coulissant verticalement dans un perçage vertical d'une pièce de verrou 51 comportant deux pattes de verrouillage 10. L'axe 50 est retenu sous la pièce de verrou 51 par un rebord 52 s'appliquant contre un épaulement dudit orifice, et il comporte un taraudage 19 dans lequel se visse la queue filetée 20 d'un pion pilote 21 dont la tête arrondie 22 retient une extrémité d'un ressort tronconique de compression 53 qui s'appuie par son autre extrémité sur le fond 4 du rail de manière à solliciter en permanence l'axe 50 vers le haut. Comme dans les modes de réalisation déjà vus, les pattes 10 de verrouillage sont aussi sollicitées vers le haut par un ressort 25, s'appuyant d'une part sur le fond 4 du rail et d'autre part sous la pièce de verrou 51, où il est positionné par une nervure circulaire 54 autour dudit orifice. Un évidement curviligne 55 est prévu en haut de la pièce de verrou 51 pour permettre d'enfoncer l'axe 50 dans le perçage, à l'encontre de la force du ressort 53, sans être gêné par l'anneau 14, et permettre d'orienter les pattes de verrouillage en manoeuvrant l'anneau 14. Le fonctionnement du dispositif est le suivant. En enfonçant l'axe 50 verticalement, on fait descendre d'abord l'axe seul et la tête 22 du pilote 21 qui va pouvoir trouver le trou 8, l'anneau 14 venant se loger dans l'évidement 55, puis l'axe entraîne avec lui la pièce de verrou 51 dont on peut orienter les pattes 10 en tournant l'anneau 14. Quand les pattes ont trouvé les encoches des rebords des rails, on relâche la pression sur l'axe 50 ; le ressort 25 applique les pattes de verrouillage au fond de leurs encoches et le ressort 53 fait remonter l'axe 50 en position haute, position dans laquelle il peut tourner librement dans la pièce de verrou de manière à présenter l'anneau 14 avec l'orientation désirée.

La figure 9 montre des variantes de réalisation d'un rail 2. Ainsi, les trous 8 de l'âme 4 du rail peuvent être situés sur une partie centrale surélevée de l'âme formant une nervure 4'. Les encoches 7 des rebords 6 du rail, dont la largeur correspond à la largeur des pattes de verrouillage 10, peuvent être entourées d'un côté et/ou de l'autre d'un gradin intermédiaire 7' permettant aux pattes de verrouillage de trouver plus facilement l'emplacement de l'encoche 7.

## Revendications

1. Dispositif d'accrochage à rail comportant :
- un rail (2) sensiblement en U comportant des ailes (5) formant un canal (9) et des encoches (7) définissant des emplacements d'accrochage prédéterminés,
- un élément d'accrochage mobile (3) comportant une partie de verrou (10, 11 ; 35 ; 51) susceptible d'être introduite dans ledit canal et d'y être retenue normalement au rail (2) par les ailes(5) du rail (2) et une partie d'axe (12 ; 30 ; 50) sensiblement normale au rail (2) dépassant du canal (9) et portant des moyens d'accrochage (14),
**caractérisé en ce que** :
- la partie de verrou (10,11 ; 35 ; 51) est un élément de positionnement dans la direction longitudinale du rail (2) et vient sous une sollicitation élastique se loger dans lesdites encoches (7) de manière à retenir l'élément d'accrochage (3) dans des emplacements prédéterminés,
- les encoches (7) sont formées dans des bords retombants (6) des ailes (5) du rail (2),
- ladite partie de verrou et de positionnement est constituée par au moins une patte de verrouillage pivotante (10) située à l'intérieur du canal (9) quand l'élément d'accrochage (3) est en place, manoeuvrable à partir de la partie d'axe (12 ; 30 ; 50), et sollicitée par un ressort (25) de manière à pouvoir venir se loger et se bloquer dans l'une desdites encoches (7) des bords retombants (6) desdites ailes (5).

2. Dispositif selon la revendication 1, **caractérisé en ce que** la partie de verrou comporte deux pattes (10) de verrouillage opposées.

3. Dispositif selon l'une quelconque des revendications précédentes, **caractérisé en ce que** la partie de verrou comporte aussi une partie de came (11) autorisant le pivotement de la patte (10) dans un seul sens.

4. Dispositif selon la revendication précédente, **caractérisé en ce que** la came (11) est constituée par un plateau formé de deux quadrants opposés circulaires et de deux quadrants opposés à profil non circulaire de plus grand diamètre.

5. Dispositif selon l'une quelconque des revendications précédentes, **caractérisé en ce que** la partie de verrou (10, 11) est d'un seul tenant avec la partie d'axe (12).

6. Dispositif selon l'une quelconque des revendications 1 à 4, **caractérisé en ce que** la partie de verrou (35 ; 51) et la partie d'axe (30 ; 50) sont dissociées.

7. Dispositif selon la revendication 6, **caractérisé en ce que** la partie d'axe (50) est montée coulissante dans la partie de verrou (51).

8. Dispositif selon la revendication 1, **caractérisé en ce que** la partie de verrou (10, 11 ; 35 ; 51)comporte sous sa face inférieure un ressort de compression (25) disposé entre l'âme du rail (2) et ladite face.

9. Dispositif selon la revendication 8, **caractérisé en ce que** le ressort de compression (25) porte sur l'âme du rail par l'intermédiaire d'une coupelle (23).

10. Dispositif selon la revendication 9, **caractérisé en ce que** ladite coupelle (23) est montée coulissante par rapport à la partie de verrou (10, 11) et retenue par la tête (22) d'un pion (21) lié à l'élément d'accrochage (3).

11. Dispositif selon l'une quelconque des revendications 1-9, **caractérisé en ce qu'**un pion (21) lié à l'élément d'accrochage (3) permet l'indexage dudit élément d'accrochage (3) dans des trous (8) prévus dans le rail (2) au niveau des emplacements prédéterminés.

## Claims

1. Rail-clamping device comprising:
- a substantially U-shaped rail (2) comprising wings (5) forming a channel (9), and recesses (7) defining predetermined clamping locations,
- a moving clamping element (3) comprising a bolt part (10, 11; 35; 51), capable of being introduced into the said channel and of being secured there perpendicularly to the rail (2) by the wings (5) of the rail (2), and a shaft part (12; 30; 50) substantially perpendicular to the rail (2), which shaft part projects from the channel (9) and bears clamping means (14),
**characterized in that**:
- the bolt part (10, 11; 35; 51) is a positioning element in the longitudinal direction of the rail (2) and, under an elastic stress, becomes lodged in the said recesses (7) in such a way as to secure the clamping element (3) in predetermined locations,
- the recesses (7) are formed in hanging edges (6) of the wings (5) of the rail (2),
- the said bolt and positioning part is constituted by at least one pivotable locking lug (10) situated inside the channel (9) when the clamping element (3) is in place, manoeuvrable from the shaft part (12; 30; 50) and tensioned by a spring (25) such as to be able to come to become lodged and jammed in one of the said recesses (7) in the hanging edges (6) of the said wings (5).

2. Device according to Claim 1, **characterized in that** the bolt part comprises two opposite locking lugs (10).

3. Device according to any one of the preceding claims, **characterized in that** the bolt part also comprises a cam part (11), which allows the lug (10) to be pivoted in a sole direction.

4. Device according to the preceding claim, **characterized in that** the cam (11) is constituted by a plate formed of two opposite circular quadrants and of two opposite quadrants of non-circular profile of greater diameter.

5. Device according to any one of the preceding claims, **characterized in that** the bolt part (10, 11) is integral with the shaft part (12).

6. Device according to any one of Claims 1 to 4, **characterized in that** the bolt part (35; 51) and the shaft part (30; 50) are separate.

7. Device according to Claim 6, **characterized in that** the shaft part (50) is mounted slidingly in the bolt part (51).

8. Device according to Claim 1, **characterized in that** the bolt part (10, 11; 35; 51) comprises, under its lower face, a compression spring (25) disposed between the stem of the rail (2) and the said face.

9. Device according to Claim 8, **characterized in that** the compression spring (25) bears upon the stem of the rail via a spring plate (23).

10. Device according to Claim 9, **characterized in that** the spring plate (23) is mounted slidingly relative to the bolt part (10, 11) and is secured by the head (22) of a pin (21) bound to the clamping element (3).

11. Device according to any one of Claims 1-9, **characterized in that** a pin (21) bound to the clamping element (3) allows the said clamping element (3) to be indexed in holes (8) provided in the rail (2) at the level of the predetermined locations.

## Patentansprüche

1. Vorrichtung zum Festklammern an einer Schiene, die Folgendes umfasst:
- eine im Wesentlichen U-förmige Schiene (2), die einen Kanal (9) bildende Schenkel (5) und vorbestimmte Festklammerstellen definierende Kerben (7) aufweist,
- ein bewegliches Festklammerelement (3), das einen Riegelteil (10, 11; 35; 51), der in den Kanal eingeführt werden und dort durch die Schenkel (5) der Schiene (2) gehalten werden kann, und einen im Wesentlichen senkrecht zur Schiene (2) verlaufenden, von dem Kanal (9) vorstehenden Achsteil (12; 30; 50), der Festklammermittel (14) trägt, aufweist,
**dadurch gekennzeichnet, dass**
- der Riegelteil (10, 11; 35; 51) ein Element zur Positionierung in Längsrichtung der Schiene (2) ist und unter elastischer Vorspannung in den Kerben (7) aufgenommen wird, um das Festklammerelement (3) an den vorbestimmten Stellen festzuhalten,
- die Kerben (7) in herabhängenden Rändern (6) der Schenkel (5) der Schiene (2) ausgebildet sind,
- der Riegel- und Positionierteil aus mindestens einem schwenkbaren Verriegelungsansatz (10) besteht, der sich im Inneren des Kanals (9) befindet, wenn das Festklammerelement (3) in Position ist, von dem Achsteil (12; 30; 50) aus betätigt werden kann und durch eine Feder (25) vorgespannt ist, um in einer der Kerben (7) der herabhängenden Ränder (6) der Schenkel (5) aufgenommen und verriegelt zu werden.

2. Vorrichtung nach Anspruch 1, **dadurch gekennzeichnet, dass** der Riegelteil zwei einander gegenüberliegende Verriegelungsansätze (10) aufweist.

3. Vorrichtung nach einem der vorhergehenden Ansprüche, **dadurch gekennzeichnet, dass** der Riegelteil des Weiteren einen Nockenteil (11) aufweist, der das Schwenken des Ansatzes (10) in eine einzige Richtung gestattet.

4. Vorrichtung nach dem vorhergehenden Anspruch, **dadurch gekennzeichnet, dass** der Nocken (11) aus einer Platte besteht, die durch zwei kreisförmige, einander gegenüberliegende Quadranten und zwei nicht kreisförmige, einander gegenüberliegende Quadranten größeren Durchmessers gebildet wird.

5. Vorrichtung nach einem der vorhergehenden Ansprüche, **dadurch gekennzeichnet, dass** der Riegelteil (10, 11) in einem Stück mit dem Achsteil (12) ausgebildet ist.

6. Vorrichtung nach einem der Ansprüche 1 bis 4, **dadurch gekennzeichnet, dass** der Riegelteil (35; 51) und der Achsteil (30; 50) getrennt sind.

7. Vorrichtung nach Anspruch 6, **dadurch gekennzeichnet, dass** der Achsteil (50) verschiebbar in dem Riegelteil (51) angebracht ist.

8. Vorrichtung nach Anspruch 1, **dadurch gekennzeichnet, dass** der Riegelteil (10, 11; 35; 51) unter seiner Innenfläche eine Druckfeder (25) aufweist, die zwischen dem Steg der Schiene (2) und der Fläche angeordnet ist.

9. Vorrichtung nach Anspruch 8, **dadurch gekennzeichnet, dass** die Druckfeder (25) durch einen Teller (23) am Steg der Schiene anliegt.

10. Vorrichtung nach Anspruch 9, **dadurch gekennzeichnet, dass** der Teller (23) verschiebbar bezüglich des Riegelteils (10, 11) angebracht ist und durch den Kopf (22) eines mit dem Festklammerelement (3) verbundenen Zapfens (21) festgehalten wird.

11. Vorrichtung nach einem der Ansprüche 1 - 9, **dadurch gekennzeichnet, dass** ein mit dem Festklammerelement (3) verbundener Zapfen (21) das Schalten des Festklammerelements (3) in den in der Schiene (2) an den vorbestimmten Stellen vorgesehenen Löchern (8) gestattet.
